# EUROPÄISCHE PATENTANMELDUNG

(11) **EP 4 817 896 A1**
(43) Veröffentlichungstag der Anmeldung: **07.10.2026**
(21) Anmeldenummer: 26169790.8
(22) Anmeldetag: 31.03.2026
(51) Int. Cl.: B60C 27/08, B60C 27/20, B60C 27/06

(54) **NUTZFAHRZEUGREIFENKETTE MIT WENIGSTENS EINER UNTER QUERSTEGEN DURCHGÄNGIGEN SPURKETTE**

(30) Priorität: 03.04.2025 DE 102025113106
(71) Anmelder: RUD Ketten Rieger & Dietz GmbH u. Co. KG, 73432 Aalen (DE)
(72) Erfinder: RIEGER, Johannes, 73432 Aalen (DE); TAFNER, Daniel, 73432 Aalen (DE)
(74) Vertreter: Grünecker Patent- und Rechtsanwälte PartG mbB

(57) **Zusammenfassung**

Die Erfindung betrifft eine Nutzfahrzeugreifenkette (5) zur Montage auf einem Rad (1) eines Nutzfahrzeugs (2), insbesondere eines Forstwirtschaftsfahrzeugs, eines Traktors oder eines Radladers. Um auch bei großen und breiten Reifen eine leichte und daher kostengünstig herzustellende sowie einfach handzuhabende Reifenkette mit hoher Traktion bereitzustellen, weist die Nutzfahrzeugreifenkette (5) erfindungsgemäß wenigstens eine Spurkette (7) auf, die im auf dem Rad montierten Zustand der Nutzfahrzeugreifenkette auf einer Reifenlauffläche (4) des Rades sich in Umfangsrichtung (6) der Reifenlauffläche erstreckend aufliegt. Ferner weist die Nutzfahrzeugreifenkette (5) Querstege (8) auf, deren Längsrichtung sich im auf dem Rad montierten Zustand der Nutzfahrzeugreifenkette sich in axialer Richtung (27) des Rades erstreckt. Die Querstege (8) liegen im auf dem Rad montierten Zustand der Nutzfahrzeugreifenkette in Umfangsrichtung beabstandet voneinander auf der Reifenlauffläche auf. Die wenigstens eine Spurkette verbindet im auf dem Rad montierten Zustand der Nutzfahrzeugreifenkette die Querstege in Umfangsrichtung durchgängig miteinander und ist an den Querstegen befestigt.

## Beschreibung

Die Erfindung betrifft eine Nutzfahrzeugreifenkette zur Montage auf einem Rad eines Nutzfahrzeugs, insbesondere eines Forstwirtschaftsfahrzeugs, eines Traktors oder eines Radladers. Die Erfindung betrifft ferner einen Quersteg für eine solche Nutzfahrzeugreifenkette.

Um für derartige Fahrzeuge auf rutschigem Grund, beispielsweise auf Schlamm, Schnee oder weichem Waldboden, ausreichend Traktion bereitzustellen, werden Nutzfahrzeugreifenketten eingesetzt. Eine Nutzfahrzeugkette ist beispielsweise aus der DE699465C bekannt. Moderne Räder von Nutzfahrzeugen weisen allerdings oft sehr große und breite Reifen auf, um die Bodenverdichtung gering zu halten und nicht zu tief in weiche Böden einzusinken.

Aufgrund der großen und breiten Reifen benötigt die Nutzfahrzeugreifenkette viel Material. Eine große Menge an Material für die Nutzfahrzeugreifenkette erhöht das Gewicht und ist teuer. Außerdem erschwert ein hohes Gewicht die Montage und Wartung der Nutzfahrzeugreifenkette.

Folglich liegt der Erfindung die Aufgabe zugrunde, eine Nutzfahrzeugreifenkette zu schaffen, die bei nur moderatem Materialeinsatz und damit geringem Gewicht auch bei großen Reifen die Traktion erheblich verbessert und einfach zu montieren ist.

Gelöst wird diese Aufgabe durch eine Nutzfahrzeugreifenkette der eingangs genannten Art mit wenigstens einer Spurkette, die im auf dem Rad montierten Zustand der Nutzfahrzeugreifenkette auf einer Reifenlauffläche des Rades sich in Umfangsrichtung der Reifenlauffläche erstreckend aufliegt, und mit Querstegen, deren Längsrichtung sich im auf dem Rad montierten Zustand der Nutzfahrzeugreifenkette in axialer Richtung des Rades erstreckt und die in Umfangsrichtung der Reifenlauffläche beabstandet voneinander auf der Reifenlauffläche aufliegen, wobei die wenigstens eine Spurkette im auf dem Rad montierten Zustand der Nutzfahrzeugreifenkette die Querstege in Umfangsrichtung der Reifenlauffläche durchgängig miteinander verbindet und an den Querstegen befestigt ist.

Diese Ausgestaltung erfordert selbst bei großen Reifen wenig Material und gewährleistet dennoch einen hohen Traktionsgewinn. Der Traktionsgewinn ergibt sich dabei aus der Verwendung und der Orientierung der Querstege. Die wenigstens eine die Querstege in Umfangsrichtung verbindende Spurkette verringert den Materialbedarf und sichert gleichzeitig in Umfangsrichtung den Zusammenhalt der Nutzfahrzeugreifenkette. Die wenigstens eine Spurkette erstreckt sich durchgängig zwischen Reifenlauffläche und Quersteg erstrecken, ist also am Quersteg nicht unterbrochen.

Im Folgenden sind voneinander unabhängige, beliebig miteinander kombinierbare und jeweils für sich vorteilhafte Weiterbildungen der Erfindung erläutert.

So kann die Nutzfahrzeugreifenkette beispielsweise ausgestaltet sein, entweder auf einem einzelnen Rad eines Nutzfahrzeugs oder auf einer Tandemachse, also zwei in Fahrtrichtung hintereinander liegenden Rädern befestigt werden. Sowohl Einzelräder als auch Tandemachsen finden bei Nutzfahrzeugen häufig Anwendung.

Die Querstege können in einer Ausgestaltung langgestreckte plattenförmige Körper insbesondere aus einem eisenhaltigen Werkstoff, oder aus einem insbesonddereverschleißfesten Kunststoff sein. Die Längsrichtung der Querstege verläuft, wie oben erwähnt, in axialer Richtung, also quer zur Umfangsrichtung des Rades. Dabei können sich die Querstege im montierten Zustand der Nutzfahrzeugreifenkette in Richtung quer zur Umfangsrichtung der Reifenlauffläche über die gesamte Reifenlauffläche erstrecken. Beispielsweise können die Querstege an ihren beiden in axialer Richtung gelegenen Enden in axialer Richtung über die Reifenlauffläche überstehen. Alle diese Maßnahmen steigern die durch die Querstege erzeugte Traktion auf rutschigem Untergrund.

Eine senkrecht zur axialen Richtung bzw. quer zur Umfangsrichtung gelegene Querschnittsfläche der Querstege kann rechteckig, T-förmig, H-förmig, V-förmig oder U-förmig sein. Bei einer einzelnen Nutzfahrzeugreifenkette können unterschiedlich geformte Querstege zum Einsatz kommen.

An ihren quer zur Umfangsrichtung gelegenen Enden können die Querstege Führungswinkel aufweisen, die im auf dem Rad montierten Zustand der Nutzfahrzeugreifenkette die Reifenschultern des Rades umgreifen. Der Führungswinkel kann in einer Ausgestaltung durch zwei Schenkel gebildet sein, von denen der eine Schenkel des Führungswinkels von einem im montierten Zustand der Nutzfahrzeugreifenkette auf der Reifenlauffläche aufliegenden Hauptkörper des Quersteges gebildet ist, während der andere Schenkel von einem sich radial nach innen bzw. von der Reifenschulter zur Reifenflanke hin erstreckenden Radialelement gebildet ist. Der Hauptkörper, im Folgenden auch als Axialelement bezeichnet, kann bei einer solchen Ausgestaltung in axialer Richtung länglich bzw. synonym langgestreckt ausgestaltet sein, so dass die Längsrichtung des Hauptkörpers in axialer Richtung verläuft. Das Radialelement kann in einem Winkel zwischen 80° und 120° zum Axialelement angeordnet sein. Das Radialelement kann eine T- oder U-förmige Querschnittsfläche aufweisen, um die Stabilität zu erhöhen. Der Führungswinkel sichert die Nutzfahrzeugkette in axialer Richtung. Zusätzlich erhöhen die Radialelemente die Reifentraktion, wenn das Rad in den Boden eingesunken ist. Der Führungswinkel erhöht auch Schutz der Reifenschulter, bzw Reifenflanke bei agressivem, steinigen Untergrund.

In einer Ausgestaltung kann sich der Quersteg, insbesondere das Axialelement, in Längsrichtung, also quer zur Umfangsrichtung, verjüngen. In seiner Mitte kann seine Breite in Umfangsrichtung kleiner sein als in den in axialer Richtung gelegenen Enden.

Im auf dem Rad montierten Zustand der Nutzfahrzeugreifenkette können die Querstege auf ihrer der Reifenlauffläche zugewandten Auflagefläche bzw. auf ihrer Unterseite wenigstens ein zur Reifenlauffläche hin vorspringendes Profileingriffselement aufweisen. Das Profileingriffselement ist insbesondere ausgestaltet, zwischen Stollen des Reifenprofils oder in Nuten des Reifenprofils einzutauchen. Auf diese Weise stellt das Profileingriffselement einen Formschluss zwischen dem jeweiligen Quersteg und dem Reifen her, so dass die Antriebs- oder Bremskraft des Reifens besser auf den Untergrund übertragen werden kann, ohne dass der Quersteg auf der Reifenlauffläche durchrutscht. Bei mindestens zwei insbesondere in Umfangsrichtung voneinander beabstandeten Profileingriffselementen an einem Quersteg erhöht sich die Stabilität der Quersteges am Reifen, d.h. ein Kippen des Quersteges am Reifen wird minimiert.

Das Profileingriffselement kann punktförmig oder linienförmig, beispielsweise in Form einer Rippe, einer Sicke, eines Buckels oder einer Noppe ausgestaltet sein. Das Profileingriffselement muss bei linienhafter Ausgestaltung nicht geradlinig sein, sondern kann auch wellen- oder zickzackförmig in axialer Richtung verlaufen, um ein Querabrutschen des Reifens auf rutschigem Untergrund, beispielsweise bei Böschungsfahrten, zu vermeiden und/oder sich besser an den Verlauf des Reifenprofils anzupassen. Bei linienhafter Ausgestaltung kann sich die Längsrichtung des Profileingriffselements in axialer Richtung erstrecken.

Die wenigstens eine Spurkette ist in einer Ausgestaltung eine Gliederkette. Beispielsweise kann eine Rundstahlkette oder eine Profilstahlkette als Spurkette verwendet werden. Die wenigstens eine Spurkette kann ausschließlich aus Rund- und/oder Profilstahlkettengliedern bestehen. Der Aufbau der Spurkette kann entweder aus stehenden und liegenden Kettengleider bestehen oder die Kettengleider können so verdreht ausgeformt sein, dass sie einen gedrehtren Kettenstrang ergeben. In einer weiteren Ausgestaltung sind mehrere nebeneinander, insbesondere parallel zueinander, verlaufende Spurketten vorgesehen. Beispielsweise können zwei oder drei Spurketten parallel zueinander verlaufen. Alternativ kann die wenigstens eine Spurkette auch von einem Seil, insbesondere Drahtseil gebildet sein. Allerdings bietet ein Seil weniger Traktion als eine Kette, insbesondere eine Gliederkette, bietet aber mehr Gewichtsersparnis.

Werden mehrere Spurketten verwendet, so sind diese bevorzugt symmetrisch zu einer in der Mitte des Reifens verlaufenden Axialebene angeordnet. Beispielsweise können die beiden in axialer Richtung außenliegenden Spurketten gleich weit von der jeweils nächstliegenden Reifenschulter beabstandet sein. Bei einer ungeraden Anzahl von Spurketten kann eine Spurkette in der Mitte des Reifens verlaufen. Bei großen Reifen ist eine solche Mittenlage oder Beabstandung von Spurketten im Bereich von etwa ± 10 % der Reifenbreite genau.

Kommen bei einer Nutzfahrzeugreifenkette mehrere Spurketten zum Einsatz, so können die einzelnen Spurkette unterschiedlich voneinander ausgestaltet sein. Beispielsweise können in der Mitte der Reifenlauffläche größere oder kleinere Spurkette, insbesondere Gliederketten, als an den Außenseiten der Reifenlauffläche verwendet werden.

Eine höhere Gewichtsersparnis lässt sich erzielen, wenn zwischen den Querstegen ausschließlich wenigstens eine in Umfangsrichtung verlaufende, insbesondere parallel zur Umfangsrichtung verlaufende Spurkette verwendet wird. Auf ein Laufnetz zwischen den Querstegen kann dabei verzichtet werden.

Um während der Rotationsbewegung des Reifens stets ausreichend Traktion zur Verfügung zu stellen, kann der Abstand der Querstege in Umfangsrichtung kleiner sein als die Länge der Reifenaufstandsfläche in Umfangsrichtung. Die Reifenaufstandsfläche ist dabei diejenige Fläche des Reifens, die mit dem Untergrund in Berührung steht, also die Traktion zwischen Reifen und Untergrund vermittelt. Bei einer solchen Dimensionierung ist es sichergestellt, dass sich stets wenigstens ein Quersteg zwischen der Reifenlauffläche und dem Untergrund befindet.

Die wenigstens eine Spurkette ist in einer Ausgestaltung mit den Querstegen verschweißt. Diese Art der Befestigung ist einfach und lässt sich vor Ort auch zu Reparaturzwecken einfach ohne zusätzliches Werkzeug bewerkstelligen.

Um die Ausrichtung der wenigstens einen Spurkette zu erleichtern, können die Querstege eine Anschweißplatte aufweisen, an der wenigstens zwei unmittelbar aufeinanderfolgende Kettenglieder der wenigstens einen Spurkette anliegen bzw. insbesondere angeschweißt sein können.

Gemäß einer weiteren Ausgestaltung können die Querstege an ihrer im montierten Zustand der der Reifenlauffläche zugewandten Unterseite wenigstens eine Aufnahme aufweisen, in der ein wenigstens ein Abschnitt der wenigstens einen Spurkette eingesteckt ist. Bei dem einen eingesteckten Abschnitt der wenigstens einen Spurkette kann es sich beispielsweise um einen Schenkel eines Kettengliedes handeln. Der Schenkel stellt bei einer Gliederkette den geraden Abschnitt eines Kettengliedes dar. Die beiden geraden Schenkel eines solchen Kettengliedes sind dann durch gerundete Buge miteinander verbunden. Ein Teil der Buge kann sich ebenfalls in der Aufnahme befinden.

Die wenigstens eine Spurkette kann, insbesondere dann, wenn sie als Gliederkette ausgestaltet ist, in Umfangsrichtung abwechselnd stehende und liegende Kettenglieder aufweisen. Bei einem stehenden Kettenglied liegt ein Schenkel bei auf der Reifenlauffläche montierter Nutzfahrzeugreifenkette auf der Reifenlauffläche auf, während der andere Schenkel von der Reifenlauffläche beabstandet ist und von dieser wegweist. Die stehenden Kettenglieder stehen also auf der Reifenlauffläche. Bei einem liegenden Kettenglied sind beide Schenkel in etwa gleich weit von der Reifenlauffläche beabstandet. Anstelle einer Spurkette mit stehenden und liegenden Kettengliedern kann selbstverständlich die Spurkette auch "gedreht" in Form eines Schragenkreuzes auf der Reifenlauffläche aufliegen. Bei einer solchen Anordnung liegt von jedem Kettenglied jeweils ein Schenkel auf der Reifenlauffläche auf. Dies erhöht die Möglichkeiten der Anschweißstellen bzw Befestigungsmöglichkeiten auf der Platte. Eine gedrehte Spurkette hat den Vorteil, homogener auf dem Reifen aufzuliegen, indem sie nicht wegkippen kann, wie dies bei einer Spurkette mit stehenden und liegenden Kettengliedern der Fall wäre.

Die Aufnahme, in der wenigstens ein Abschnitt der wenigstens einen Spurkette eingesteckt ist, kann beispielsweise als eine Nut im Quersteg oder in einer an der Unterseite des Querstegs angebrachten Anschweißplatte ausgebildet sein. Die Unterseite des Quersteges kann eine oder mehrere in Umfangsrichtung fluchtende Aufnahmen für jede Spurkette aufweisen. In eine Aufnahme kann wenigstens ein Schenkel eines Kettengliedes eingeführt sein. In der Aufnahme kann insbesondere der Schenkel eines stehenden Kettengliedes aufgenommen sein.

Die Anschweißplatte kann an der Unterseite aufgeschweißt und/oder angeschraubt und/oder hartgelötet sein. Alternativ kann die Anschweißplatte auch monolithisch am Quersteg ausgeformt sein, beispielsweise durch Umformen oder ein spanabhebendes Verfahren, wie Fräsen.

Gemäß einer Ausgestaltung ist wenigstens das eine in der Aufnahme angeordnete Kettenglied der Spurkette mit dem jeweiligen Quersteg verschweißt und/oder verschraubt.

Alternativ oder zusätzlich zum Verschweißen der Spurkette kann sich an den Unterseiten der Querstege wenigstens ein Haltebügel befinden, in dem die wenigstens eine Spurkette unverlierbar eingehängt ist.

Für jede Spurkette kann an einem Quersteg jeweils ein Haltebügel vorgesehen sein. Alternativ kann für jede Spurkette auch mehr als ein Haltebügel vorgesehen sein, wobei jeder Haltebügel in ein anderes Kettenglied derselben Spurkette eingreift.

Der Haltebügel kann in einer Ausgestaltung ein stehendes oder ein liegendes Kettenglied der Spurkette durchragen, beispielsweise indem ein Schenkel des Haltebügels in die zentrale Öffnung eines Kettengliedes eingesteckt ist.

Alternativ kann der Haltebügel auch ein Kettenglied, insbesondere ein liegendes Kettenglied außen umgreifen, so dass er zwischen zwei stehenden Kettengliedern formschlüssig in Umfangsrichtung fixiert ist.

Der Haltebügel kann in einer Ausgestaltung U-förmig sein. Die beiden Enden des Haltebügels sind am Quersteg befestigt, beispielsweise verschraubt oder verschweißt. Die Querstege können jeweils Aufnahmen aufweisen, in denen die Haltebügel, insbesondere deren Enden, eingesetzt sind.

Umgreift der Haltebügel ein liegendes Kettenglied, so ist er in einer Ausgestaltung von den beiden benachbarten Kettengliedern überragt, so dass er nicht auf der Reifenlauffläche aufliegt. Dadurch ist der Haltebügel besser vor Verschleiß geschützt. Gleiches gilt, wenn der Haltebügel ein liegendes Kettenglied umgreift.

Schließlich können die Querstege auf ihrer Oberseite, die im montierten Zustand der Nutzfahrzeugreifenkette von der Reifenlauffläche wegweist, aufgeschweißte und/oder auswechselbare Traktionselemente aufweisen.

Im Folgenden ist die Erfindung anhand von Ausführungsbeispielen näher erläutert. Nach Maßgabe der obigen Ausführungen können Merkmale, die oben beschrieben, aber in einem Ausführungsbeispiel nicht enthalten sind, diesem Ausführungsbeispiel hinzugefügt werden, wenn es auf den mit diesem Merkmal verbundenen technischen Effekt bei einer bestimmten Anwendung ankommen sollte. Umgekehrt kann nach Maßgabe der obigen Ausführungen auch ein Merkmal eines Ausführungsbeispiels weggelassen werden, wenn dieses Merkmal für eine bestimmte Anwendung keine Vorteile bietet.

In den Figuren sind für Elemente, die einander hinsichtlich räumlich-körperlicher Struktur und/oder Funktion entsprechen, dieselben Bezugszeichen verwendet.

Es zeigen:
- Fig. 1: eine schematische Perspektivdarstellung eines Rades eines Nutzfahrzeugs mit einer darauf montierten Nutzfahrzeugreifenkette;
- Fig. 2: eine schematische Perspektivdarstellung der abgewickelten Nutzfahrzeugreifenkette der Fig. 1 ohne Rad und Nutzfahrzeug;
- Fig. 3: eine schematische Ansicht entlang einer Umfangsrichtung eines Quersteges der Nutzfahrzeugreifenkette der Figuren 1 und 2 ohne Rad und Nutzfahrzeug;
- Fig. 4: eine schematische Perspektivdarstellung einer Anbindung der Spurkette 7 an einen Querträger 8;
- Fig. 5: eine schematische Perspektivdarstellung einer weiteren Ausgestaltung einer Anbindung der Spurkette 7 an den Querträger 8;
- Fig. 6: eine schematische Perspektivdarstellung einer weiteren Ausgestaltung einer Anbindung der Spurkette 7 an den Querträger 8;
- Fig. 7: eine schematische Perspektivdarstellung einer weiteren Ausgestaltung einer Anbindung der Spurkette 7 an den Querträger 8;
- Fig. 8: eine schematische Perspektivdarstellung einer weiteren Ausgestaltung einer Anbindung der Spurkette 7 an den Querträger 8;
- Fig. 9: eine schematische Perspektivdarstellung einer weiteren Ausgestaltung einer Anbindung der Spurkette 7 an den Querträger 8;
- Fig. 10: eine schematische Perspektivdarstellung einer weiteren Ausgestaltung der Nutzfahrzeugreifenkette.

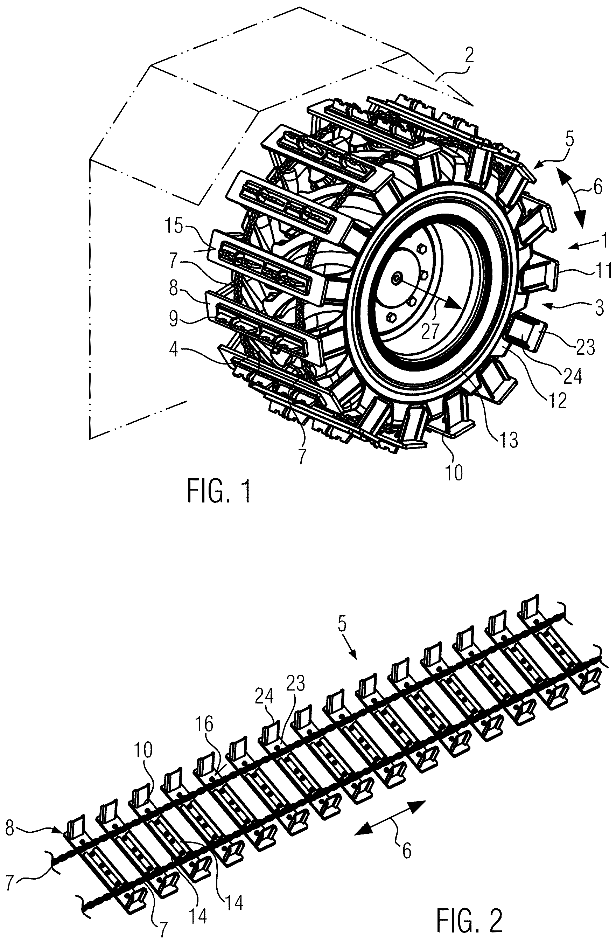

Fig. 1 zeigt ein Rad 1 eines nur schematisch dargestellten Nutzfahrzeuges 2, beispielsweise eines Forstwirtschaftsfahrzeugs, eines Traktors oder eines Radladers.

Das Rad 1 weist einen Reifen 3 mit einer Reifenlauffläche 4 auf. Auf der Reifenlauffläche 4 ist eine Nutzfahrzeugreifenkette 5 montiert, die dazu dient, die Traktion des Reifens 3 auf rutschigem Grund, wie beispielsweise Schlamm, Schnee oder rutschigem Waldboden zu verbessern. Die Nutzfahrzeugreifenkette 5 erstreckt sich entlang einer Umfangsrichtung 6 des Rades 1, insbesondere geschlossen um die Reifenlauffläche 4. Im Folgenden ist stets der auf dem Rad 1 bzw. Reifen 3 montierten Zustand der Nutzfahrzeugreifenkette 5 beschrieben, auch wenn dies nicht ausdrücklich erwähnt ist oder in den entsprechenden Figuren kein Rad 1 oder Reifen 2 gezeigt ist.

Die Nutzfahrzeugreifenkette 5 weist wenigstens eine Spurkette 7 auf, die auf der Reifenlauffläche 4 aufliegt. Die wenigstens eine Spurkette 7 kann sich insbesondere geschlossen entlang der Umfangsrichtung 6 um die Reifenlauffläche 4 herum erstrecken. In einer Ausgestaltung, wie sie in Fig. 1 dargestellt ist, können zwei parallele Spurketten 7 zum Einsatz kommen. Natürlich können auch drei oder mehr Spurketten 7 verwendet werden, was insbesondere bei sehr breiten und/oder großen Reifen 3 von Vorteil sein kann.

Die wenigstens eine Spurkette 7 ist in einer Ausgestaltung eine Gliederkette, beispielsweise eine Rundstahlkette oder eine Profilstahlkette. Sie kann in Umfangsrichtung 6 durchgängig sein oder in einer anderen Ausgestaltung 2 durch ein Kettenschloss miteinander verbundene Enden aufweisen. Sind mehrere parallel zueinander verlaufende Spurketten 7 vorhanden, so können diese unterschiedlich ausgestaltet sein, beispielsweise unterschiedliche Größen oder Formen aufweisen.

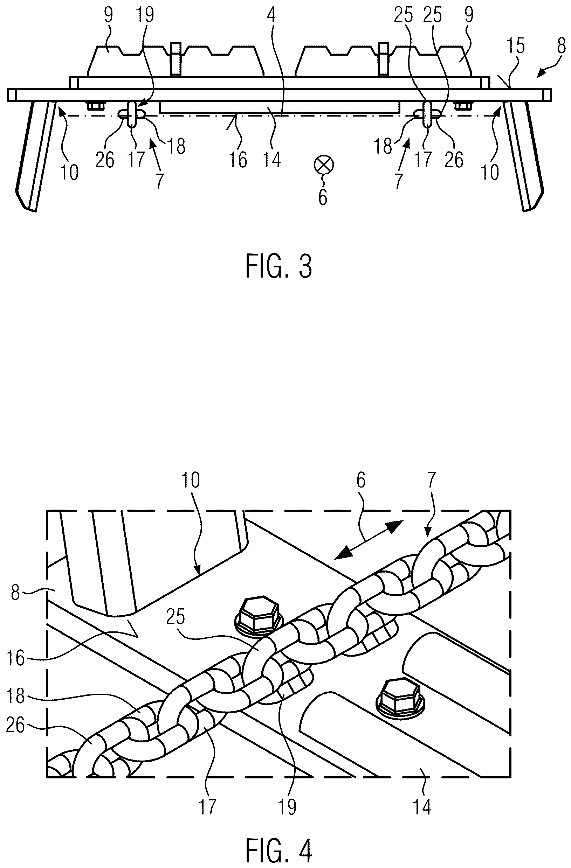

Sind mehrere Spurketten 7 vorhanden, so können sie symmetrisch bezüglich einer axialen Mittenebene der Reifenlauffläche 4 angeordnet sein, mit anderen Worten also jeweils gleich weit von der jeweils nächstliegenden Reifenschulter 12 beabstandet sein. Dies ist beispielhaft auch beim Ausführungsbeispiel der Fig. 4 der Fall. Die Reifenschulter 12 ist der Bereich des Reifens 3, an dem die in radialer Richtung weisende Reifenlauffläche 4 in die in axiale Richtung 27 weisende Reifenflanke 13 übergeht. An der Reifenschulter 12 ist beispielsweise noch Reifenprofil vorhanden.

Die Nutzfahrzeugreifenkette 5 weist Querstege 8 auf, die im montierten Zustand der Nutzfahrzeugreifenkette 5, wie er in Fig. 1 dargestellt ist, in Umfangsrichtung 6 insbesondere jeweils gleich weit voneinander beabstandet sind. Die Querstege 8 sind an der wenigstens einen Spurkette 7 angebracht. Durch die wenigstens eine Spurkette 7 sind die Querstege 8 in Umfangsrichtung miteinander verbunden, so dass die Nutzfahrzeugreifenkette 5 einen Ring bildet. Sind mehrere Spurketten 7 vorhanden, sind diese in axialer Richtung 27, also quer zur Umfangsrichtung 6, miteinander verbunden.

Die Querstege 8 sind in axialer Richtung 27 länglich und erstrecken sich quer zur Umfangsrichtung 6, also in ihrer Längsrichtung, über die gesamte Breite der Reifenlauffläche 4. An ihren beiden in axialer Richtung 27 gelegenen Enden 11 ist in einer Ausgestaltung jeweils ein Führungswinkel 10 ausgebildet, der die jeweilige Reifenschulter 12 umgreift. Die beiden Schenkel des Führungswinkel 10 kann durch zwei in einem zwischen 90° und 120° zusammengefügten oder umgeformten Elementen, einem Axialelement 23 und einem Radialelement 24 gebildet sein. Das Axialelement 23 kann einen auf der Reifenlauffläche 4 aufliegenden, länglichen und sich quer zur Umfangsrichtung 6 erstreckenden Hauptkörper des Querträgers 8 bilden. Das Radialelement 24 des Winkels 10 ist von einem sich daran im Wesentlichen radial nach innen, zur Reifenflanke 13 erstreckenden Element 24 gebildet, das kürzer ist als das Axiallement 23 und nicht langgestreckt sein muss.

Die wenigstens eine Spurkette 7 befindet sich bei montierter Nutzfahrzeugreifenkette 5 zwischen den Querstegen 8, insbesondere deren Hauptkörper 23 und der Reifenlauffläche 4.

An der von der Reifenlauffläche 4 wegweisenden Oberseite 15 des Quersteges können eine oder mehrere Traktionselemente 9 insbesondere austauschbar angebracht sein.

Fig. 2 zeigt die abgewickelte Nutzfahrzeugreifenkette 5 der Fig. 1 mit Blick auf deren Unterseiten 16. Die wenigstens eine Spurkette 7 kann an zur Reifenlauffläche 4 weisenden Unterseite 16 anliegen.

Die Querstege 8 bzw. deren Hauptkörper 23 können an ihrer Unterseite 16 mit wenigstens einem Profileingriffselement 14 versehen sein. Das wenigstens eine Profileingriffselement 14 springt von der Unterseite 16 zur Reifenlauffläche 4 hin bzw. in Richtung nach radial innen vor. Es dient dazu, einen Formschluss mit dem Reifenprofil der Reifenlauffläche 4 einzugehen und so ein Verrutschen der Nutzfahrzeugreifenkette 5 relativ zum Rad 1 zu vermeiden. Ein solcher Formschluss wird hergestellt, wenn ein Profileingriffselement 14 in Umfangsrichtung 6 zwischen zwei Stollen des Reifensprofils zu liegen kommt.

Das Profileingriffselement 14 kann je nach Anwendungsfall unterschiedliche Formen aufweisen. Es können punkt- und/oder linienförmige Vorsprünge, wie beispielsweise Noppen oder Rippen, vorgesehen sein. Beim Ausführungsbeispiel der Fig. 2 sind lediglich beispielhaft an jedem Quersteg 8 zwei parallele, geradlinige und sich in axialer Richtung 27 erstreckende Profileingriffselemente 14 vorgesehen.

Fig. 3 zeigt eine Ansicht entlang der Umfangsrichtung 6 auf einen Quersteg 8 der Nutzfahrzeugreifenkette 5 der Figuren 1 und 2. Die wenigstens eine Spurkette 7 weist in Umfangsrichtung 6 alternierend aufeinanderfolgend stehende Kettenglieder 17 und liegende Kettenglieder 18 auf.

Bei einem stehenden Kettenglied 17 ist einer der beiden geraden, durch runde Buge 26 miteinander verbundenen Kettengliedschenkel 25 näher an der Reifenlauffläche 4 angeordnet bzw. auf ihr aufliegend, während der andere Schenkel von der Reifenlauffläche 4 wegweist. Das stehende Kettenglied 17 "steht" auf der Reifenlauffläche 4. Das liegende Kettenglied 18 dagegen "liegt" auf der Reifenlauffläche 4, da beide Schenkel 25 gleich weit von der Reifenlauffläche 4 beabstandet sind bzw. auf der Reifenlauffläche aufliegen.

Alternativ können die Kettenglieder 17, 18 auch beide schragenkreuzförmig auf der Reifenlauffläche 4 aufliegen, also beide jeweils mit einem Schenkel 25 auf der Reifenlauffläche 4 aufliegen, während der jeweils andere Schenkel 25 von der Reifenlauffläche 4 beabstandet ist. In dieser Ausgestaltung ist die Spurkette 7 gegenüber einer Spurkette mit stehenden und liegenden Kettengliedern um 45 Grad gedreht.

Im Folgenden ist anhand unterschiedlicher Ausführungsformen dargelegt, wie eine Spurkette 7 an einem Quersteg 8 befestigt werden kann. Grundsätzlich kann die Befestigung stoffschlüssig und/oder formschlüssig erfolgen. Die unterschiedlichen Arten der Befestigung, wie sie nachstehend beschrieben sind, können an einer Nutzfahrzeugreifenkette 5 bzw. auch an einem einzigen Quersteg 8 gleichzeitig zum Einsatz kommen.

Fig. 4 zeigt, dass wenigstens ein Kettenglied einer Spurkette 7 mit dem Quersteg 8, insbesondere dessen Unterseite 16 an einer Schweißstelle 19 verschweißt sein kann. Beispielsweise kann ein stehendes Kettenglied oder es können zwei stehende Kettenglieder 17 mit einem ihrer Schenkel 25 mit dem Quersteg 8 verschweißt sein. Die Schweißstelle kann sich demnach an dem dem Querträger 8 zugewandten Schenkel 25 eines stehenden Kettengliedes 19 befinden.

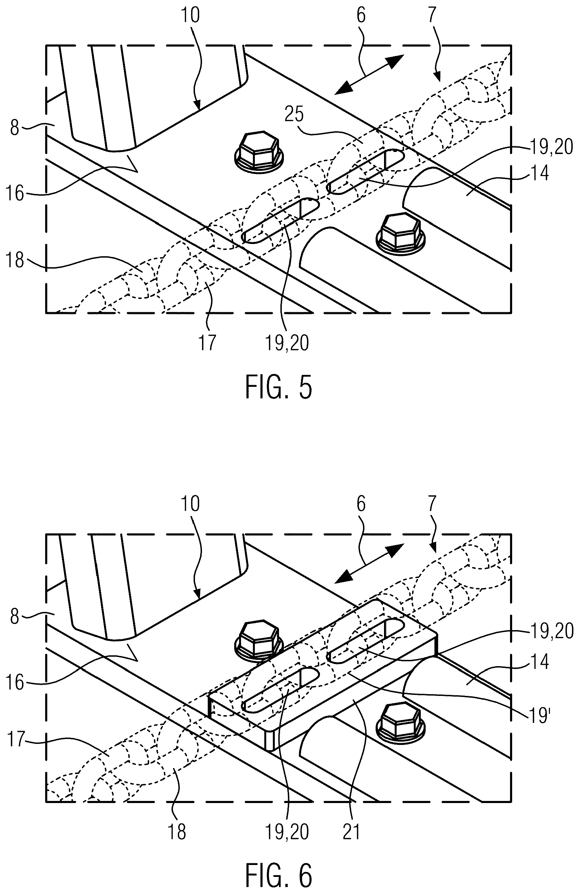

In der Ausgestaltung der Fig. 5 weist der Querträger 8, insbesondere dessen Hauptkörper 23, eine als beispielsweise nutförmige Ausnehmung ausgestaltete Aufnahme 20 auf, in der wenigstens ein dem Quersteg 8 zugewandter Schenkel 25 eines stehenden Kettengliedes 17 aufgenommen ist. Es sind unterschiedliche Varianter der Aufnahme 20 möglich. So kann eine einzige Aufnahme 20 für einen einzigen Schenkel 25 eines einzelnen stehenden Kettengliedes 17 vorgesehen sein. Alternativ kann eine einzige Aufnahme 20 auch zwei oder mehr Schenkel 25 zweier in Umfangsrichtung 6 insbesondere unmittelbar aufeinanderfolgender stehender Kettenglieder 17 aufnehmen. Wiederum alternativ können auch zwei oder mehr in Umfangsrichtung 6 beabstandete Aufnahmen 20 vorgesehen sein, in denen jeweils nur ein Schenkel 25 eines stehenden Kettengliedes aufgenommen ist. Die Aufnahme 20 stellt eine Schweißstelle bereit, die das Ausrichten und Anschweißen der Spurkette 7 am Querträger 8 erleichtert. Gleichzeitig sichert die Aufnahme 20 die Spurkette 7 auch formschlüssig in Umfangsrichtung 6.

Die Aufnahme 20 kann so tief sein, dass wenigstens ein liegendes Kettenglied 18 unmittelbar an der Unterseite 16 des Quersteges 8 anliegt, weil der sich in der Aufnahme 20 befindliche Schenkel des stehenden Kettengliedes 17 ausreichend weit eintauchen kann. In diesem Fall kann sich eine alternative oder zusätzliche Schweißstelle am liegenden Kettenglied 18 befinden. Beispielsweise können die Schenkel 25 des liegenden Kettengliedes 18 mit der Unterseite 16 verschweiß sein.

Die Aufnahme 20 kann als eine Nut ausgestaltet sein, deren lichte Breite in axialer Richtung 27 höchstens 10 bis 20 % größer sein kann als die Dicke der Kettenglieder 17, 18 der Spurkette 7.

Die Aufnahmen 20 sind in Fig. 5 entlang der Umfangsrichtung geschlossen. Es wäre grundsätzlich auch möglich, die Aufnahmen in Umfangsrichtung offen zu gestalten, wenn beispielsweise der Querträger 8 eine geringere Breite in Umfangsrichtung 6 aufweist.

Fig. 6 zeigt dieselbe Ausgestaltung der wenigstens einen Aufnahme 20, wie sie bei Fig. 5 erläutert ist. Der einzige Unterschied besteht darin, dass bei der Ausgestaltung der Fig. 6 die wenigstens eine Aufnahme 20 in einer Anschweißplatte 21 ausgebildet ist, die von der Unterseite 16 des Quersteges 8 zur Reifenlauffläche 4 hin, also radial nach innen, vorspringt. Die Anschweißplatte 21 kann durch umformendes und/oder spanabhebendes Bearbeiten des Querträgers 8 hergestellt sein, sodass sie mit diesem monolithisch verbunden ist. Die Anschweißplatte 21 kann aber auch mit dem Querträger 8 verschraubt und/oder verschweißt sein. Alternativ oder zusätzlich zu wenigstens einem stehenden Kettenglied 17 kann wenigstens ein liegendes Kettenglied 18 mit der Anschweißplatte 21 verschweißt sein.

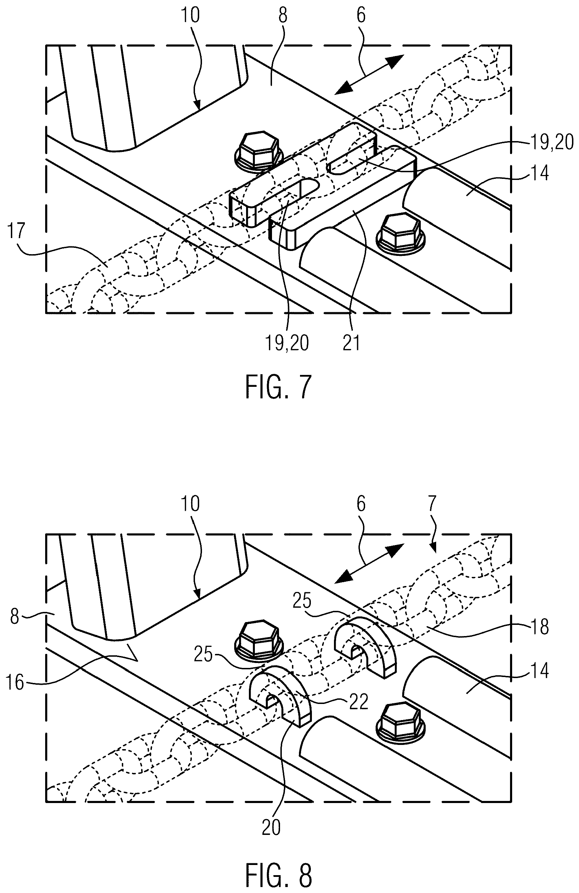

Fig. 7 zeigt eine Variante der Ausgestaltung der Fig. 6, bei der die Aufnahmen 20 in Umfangsrichtung 6 offen sind. Dadurch kann die Anschweißplatte 21 in Umfangsrichtung 6 verkürzt sein. In einer besonders kurzen Ausgestaltung kann die Aufnahme 20 auch als eine in Umfangsrichtung 6 beidseitig offene Nut ausgestaltet sein, in die der Schenkel 25 wenigstens eines stehenden Kettengliedes 17 aufgenommen ist. In einer nicht dargestellte, nochmals vereinfachten Ausgestaltung stellt die Anschweißplatte 21 lediglich eine gerade Anlagekante bereit, an der die stehenden und gegebenenfalls auch liegenden Kettenglieder 17, 18 anliegend ausgerichtet und angeschweißt werden können. Eine solche Anschweißplatte 21 kann einfach als ein Quader ausgestaltet sein. Zwei sich gegenüberliegende Quader können dann zwischen sich eine einfache Aufnahme ausbilden.

Fig. 8 zeigt einen Haltebügel 22, in den ein Kettenglied 17, 18 eingehängt ist. Je nach Ausgestaltung des Haltebügels 22 kann ein liegendes Kettenglied 18 oder ein stehendes Kettenglied 17 in den Haltebügel 22 eingehängt sein. Wie Fig. 8 zeigt, können anstelle eines auch zwei oder mehr Haltebügel 22 zur Befestigung einer Spurkette 7 an einem Quersteg 8 verwendet werden.

Der Haltebügel 22 kann zwischen zwei Schenkeln 25 eines Kettengliedes 17, 18, also durch die zentrale Öffnung eines Kettengliedes 17, 18, hindurchreichen, oder aber beide Schenkel 25 umgreifen. Letzterer Fall ist insbesondere bei einem liegenden Kettenglied 18 möglich, da dann der Haltebügel 22 zur Reifenlauffläche 4 hin die Spurkette 7 nicht überragt. Der Haltebügel 22 ist dann durch die beiden in Umfangsrichtung 6 benachbarten stehenden Kettenglieder 17 formschlüssig in Umfangsrichtung 6 relativ zur Kette fixiert.

Der Haltebügel 22 kann U-förmig ausgestaltet sein und mit der Unterseite 16 des Querstegs 8 stumpf verschweißt sein und/odermit dem Quersteg 8 verschraubt sein

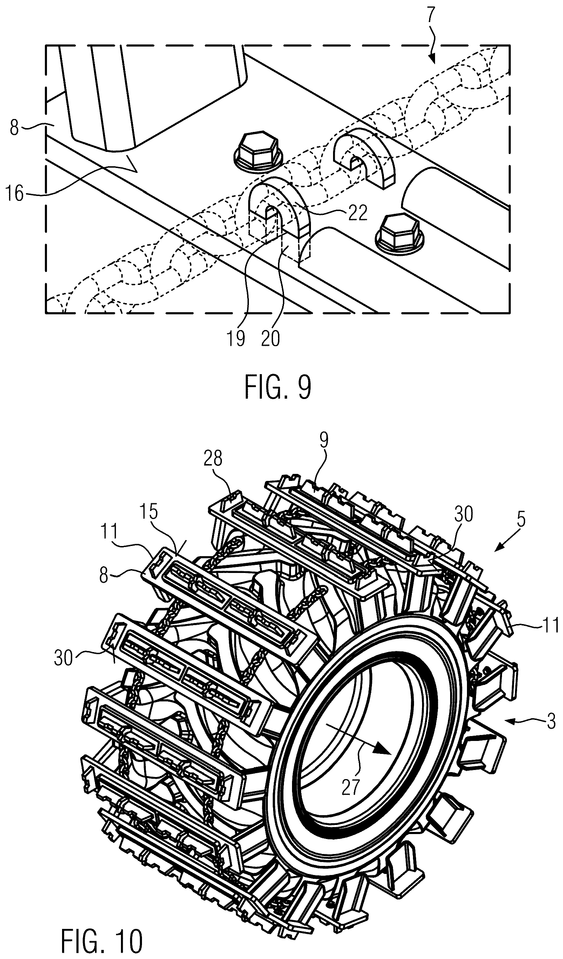

Fig. 9 zeigt eine Ausgestaltung, bei der der Haltebügel 22 in eine Aufnahme 20 des Querstegs 8 eingesetzt und dort verschweißt oder verschraubt ist. Insbesondere können dabei die beiden Enden eines Haltebügels 22 in entsprechende Aufnahmen 20 eines Quersteges 8 eingesetzt sein. Fig. 10 zeigt eine weitere Ausgestaltung einer Nutzfahrzeugreifenkette 5, wobei im Folgenden nur auf die Unterschiede zur Nutzfahrzeugreifenkette 5 der Fig. 1 eingegangen ist.

Bei der Ausgestaltung der Fig. 10 sind zusätzlich zu den insbesondere austauschbaren Traktionselementen 9 weitere Traktionselemente 28 vorgesehen. Die Traktionselemente 9 befinden sich zwischen den weiteren Traktionselemente 28. Die weiteren Traktionselemente 28 befinden sich auf der Oberseite 15 zumindest einzelner Querstege 8 an deren in axialer Richtung 27 gelegenen Enden 11. Des Weiteren können auch Traktionselemente auf der Oberseite 15 angeschweißt oder angeschraubt sein. Die Längsrichtung dieser Traktionselemente kann parallel zur Umfangsrichtung, quer zur Umfangsrichtung oder in einem beliebigen Winkel zu Umfangsrichtung, wobei sie etwas in Richtung zur Reifenmitte hin von den Enden **11** beabstandet sein können.

Die Längsrichtung der weiteren Traktionselemente 28 kann quer zur Längsrichtung der Traktionselemente 9 ausgerichtet sein. Insbesondere ist die Längsrichtung der weiteren Traktionselemente 28 parallel zur Umfangsrichtung, um die Spurstabilität auf besonders weichen Untergründen zu verbessern.

Insbesondere können also die Flachseiten 30 der weiteren Traktionselemente in Richtung quer zur Umfangsrichtung 6 weisen, während die Schmalseiten 31 in Umfangsrichtung weisen.

Die weiteren Traktionselemente 28 können bezüglich der Reifenmitte symmetrisch zueinander angeordnet sein.

Die Flachseiten 30 bzw. die Längsrichtung der weiteren Traktionselemente 28 können auch schräg zur Umfangsrichtung ausgerichtet sein, beispielsweise können die weiteren Traktionselemente 28 eines Quersteges 8 an einer in Umfangsrichtung 6 gelegenen Seite des Quersteges 8 weniger weit voneinander beabstandet sein als auf der anderen in Umfangsrichtung 6 gelegenen Seite. Auf diese Weise ergibt sich eine in Umfangsrichtung 6 V-förmige Anordnung.

### Bezugszeichen

- 1: Rad
- 2: Nutzfahrzeug
- 3: Reifen
- 4: Reifenlauffläche
- 5: Nutzfahrzeugreifenkette
- 6: Umfangsrichtung
- 7: Spurkette
- 8: Quersteg
- 9: Traktionselement
- 10: Führungswinkel
- 11: Ende des Quersteges
- 12: Reifenschulter
- 13: Reifenflanke
- 14: Profileingriffselement
- 15: Oberseite des Quersteges
- 16: Unterseite des Quersteges
- 17: stehendes Kettenglied
- 18: liegendes Kettenglied
- 19, 19': Schweißstelle
- 20: Aufnahme
- 21: Anschweißplatte
- 22: Haltebügel
- 23: Axialelement des Führungswinkels, Hauptkörper des Querträgers
- 24: Radiallement des Führungswinkels, kurzer Schenkel
- 25: Schenkel eines Kettengliedes einer Spurkette
- 26: Bug eines Kettengliedes einer Spurkette
- 27: axiale Richtung
- 28: weiteres Traktionselement
- 30: Flachseite
- 31: Schmalseite

## Patentansprüche

1. Nutzfahrzeugreifenkette (5) zur Montage auf einem Rad (1) eines Nutzfahrzeugs, insbesondere eines Forstwirtschaftsfahrzeugs, Traktors oder Radladers,
mit wenigstens einer Spurkette (7), die im auf dem Rad (1) montierten Zustand der Nutzfahrzeugreifenkette (5) auf einer Reifenlauffläche (4) des Rades (1) sich in Umfangsrichtung (6) der Reifenlauffläche (4) erstreckend aufliegt, und
mit Querstegen, deren Längsrichtung sich im auf dem Rad (1) montierten Zustand der Nutzfahrzeugreifenkette (5) sich in axialer Richtung (27) des Rades (1) erstrecken und in der Umfangsrichtung (6) beabstandet voneinander auf der Reifenlauffläche (4) aufliegen,
wobei die wenigstens eine Spurkette (7) im auf dem Rad (1) montierten Zustand der Nutzfahrzeugreifenkette (5) die Querstege (8) der Umfangsrichtung (6) durchgängig miteinander verbindet und an den Querstegen (8) der Mehrzahl von Querstegen (8) befestigt ist.

2. Nutzfahrzeugreifenkette (5) nach Anspruch 1, wobei sich die wenigstens eine Spurkette (7) im auf dem Rad (1) montierten Zustand der Nutzfahrzeugreifenkette (5) in Umfangsrichtung (6) durchgängig zwischen der Reifenlauffläche (4) und den Querstegen erstreckt.

3. Nutzfahrzeugreifenkette (5) nach Anspruch 1 oder 2, wobei sich die Querstege (8) im auf dem Rad (1) montierten Zustand der Nutzfahrzeugreifenkette (5) in Richtung quer zur Umfangsrichtung (6) der Reifenlauffläche (4) über die gesamte Reifenlauffläche (4) erstrecken.

4. Nutzfahrzeugreifenkette (5) nach einem der Ansprüche 1 bis 3, wobei die Querstege (8) an ihren quer zur Umfangsrichtung (6) der Reifenlauffläche (4) gelegenen Enden Führungswinkel (10) aufweisen, die im auf dem Rad (1) montierten Zustand der Nutzfahrzeugreifenkette (5) die Reifenschultern umgreifen.

5. Nutzfahrzeugreifenkette (5) nach einem der Ansprüche 1 bis 4, wobei die Querstege (8) auf ihrer im auf dem Rad (1) montierten Zustand der Nutzfahrzeugreifenkette (5) der Reifenlauffläche (4) zugewandten Auflagefläche wenigstens ein zur Reifenlauffläche (4) hin vorspringendes Profileingriffselement (14) aufweist.

6. Nutzfahrzeugreifenkette (5) nach einem der Ansprüche 1 bis 5, wobei die wenigstens eine Spurkette (7) mit den Querstegen verschweißt ist.

7. Nutzfahrzeugreifenkette (5) nach einem der Ansprüche 1 bis 6, wobei die Querstege (8) eine Anschweißplatte (21) aufweisen, an der wenigstens zwei unmittelbar aufeinanderfolgende Kettenglieder (17, 18) der wenigstens einen Spurkette (7) anliegen.

8. Nutzfahrzeugreifenkette (5) nach einem der Ansprüche 1 bis 7, wobei an den Querstegen an ihrer im auf dem Rad (1) montierten Zustand der Nutzfahrzeugreifenkette (5) auf der Reifenlauffläche (4) aufliegenden Unterseite (16) wenigstens eine Aufnahme (20) aufweisen, in der ein Abschnitt der wenigstens einen Spurkette (7) eingesteckt ist.

9. Nutzfahrzeugreifenkette (5) nach Anspruch 8, wobei die wenigstens eine Spurkette (7) im auf dem Rad (1) montierten Zustand der Nutzfahrzeugreifenkette (5) zumindest in ihrem an der Unterseite (16) der Querstege (8) anliegenden Bereichen wenigstens ein stehendes und wenigstens ein liegendes Kettenglied (17, 18) aufweist und wobei wenigstens ein stehendes Kettenglied (17) in der Aufnahme (20) aufgenommen ist.

10. Nutzfahrzeugreifenkette (5) nach Anspruch 8 oder 9, wobei wenigstens das wenigstens eine in der Aufnahme (20) eingesteckte Kettenglied mit dem jeweiligen Quersteg (8) verschweißt ist.

11. Nutzfahrzeugreifenkette (5) nach einem der Ansprüche 8 bis 10, wobei die Aufnahme (20) in einer im auf dem Rad (1) montierten Zustand der Nutzfahrzeugreifenkette (5) zur Reifenlauffläche (4) hin vorspringenden Anschweißplatte (21) ausgebildet ist, die jeweils an der Unterseite (16) der Querstege (8) angeordnet ist.

12. Nutzfahrzeugreifenkette (5) nach einem der Ansprüche 1 bis **11,** wobei sich an den Unterseiten (16) der Querstege (8) wenigstens ein Haltebügel (22) befindet, in den die wenigstens eine Spurkette (7) unverlierbar eingehängt ist.

13. Nutzfahrzeugkette nach Anspruch 12, wobei der Haltebügel U-förmig ist und die beiden Enden des Haltebügels (22) am Quersteg (8) befestigt sind.

14. Nutzfahrzeugreifenkette (5) nach Anspruch 13, wobei wenigstens ein Ende des Haltebügels (22) in eine Aufnahme (20) an der Unterseite (16) des Quersteges eingesetzt ist.

15. Nutzfahrzeugreifenkette (5) nach einem der Ansprüche 1 bis 14, wobei die Querstege (8) auf ihrer Oberseite (15), die im montierten Zustand von der Reifenlauffläche (4) wegweist, aufgeschweißte oder auswechselbare Traktionselemente (9) aufweist.
